# EUROPEAN PATENT SPECIFICATION

(11) **EP 3 809 611 B1**
(45) Date of publication and mention of the grant of the patent: **15.11.2023**
(21) Application number: 19821926.3
(22) Date of filing: 11.06.2019
(51) Int. Cl.: H04L 25/03

(54) **LINK BALANCING PARAMETER TRAINING CONTROL CIRCUIT**
STEUERSCHALTUNG ZUM TRAINIEREN VON LINK-BALANCING-PARAMETERN
CIRCUIT DE COMMANDE D'APPRENTISSAGE DE PARAMÈTRE D'ÉQUILIBRAGE DE LIAISON

(30) Priority: 19.06.2018 CN 201810631789
(43) Date of publication of application: 21.04.2021
(73) Proprietor: ZTE Corporation, shenzhen Guangdong 518057 (CN)
(72) Inventor: CAI, Hongyu, Shenzhen, Guangdong 518057 (CN); LIU, Rumin, Shenzhen, Guangdong 518057 (CN); SONG, Haihua, Shenzhen, Guangdong 518057 (CN)
(74) Representative: Betten & Resch
(86) International application number: PCT/CN2019/090775
(87) International publication number: WO 2019/242534

(56) References cited:
- CN-A- 106 375 110
- CN-A- 108 155 964
- US-A1- 2008 089 433
- US-A1- 2009 168 936
- US-A1- 2012 230 454

## Description

### TECHNICAL FIELD

The present disclosure relates to, but not limited to the field of communication technology.

### BACKGROUND

With the technological development in electronic industry, especially the development of transmission interfaces, IEEE 1284 is replaced by Universal Serial Bus (USB) interface, PATA is replaced by Serial ATA (SATA) interface, and Peripheral Component Interconnect (PCI) is replaced by PCI-Express. All of these replacements prove that conventional parallel interfaces have reached a bottleneck in speed, and would be replaced by serial interfaces with a higher speed. Therefore, a high-speed serial link SerDes technology emerges as the times demand and becomes a mainstream of high-speed serial interfaces. The SerDes interfaces are rapidly spread and widely used in the field of optical fiber communication.

For high-speed SerDes, signal jitter may approach or exceed one Unit Interval (UI). There is a need to use a nonlinear equalizer called DFE (Decision Feedback Equalization) to predict a sampling threshold of a current bit by tracking data of a plurality of previous UIs, to amplify signal rather than noise for better Signal-Noise Ratio (SNR), thereby obtaining an ideal result. However, as a channel is a time-varying medium, affected by factors such as temperature, voltage and slow process variations, there is a need to conduct training each time a high-speed SerDes link is established to obtain optimal link balancing parameters adaptive to channel characteristics.

US2012230454A1 relates to a transceiver includes a clock and data recovery module (CDR) with an eye monitor and a cycle slip monitor. The cycle slip detector monitors a CDR lock condition, which might be through detection of slips in sampling and/or transition timing detection. The cycle slip detector provides a check point to sense system divergence, allowing for a mechanism to recover CDR lock. In addition, when the CDR is out-of-lock, the various parameters that are adaptively set (e.g., equalizer parameters) might be invalid during system divergence. Consequently, these parameters might be declared invalid by the system and not used.

In relevant tests of actual optical communication, it often happens that the trained link balancing parameters of the link are not optimal. For example, during a power-on process of a tester used in a test, the optical signal outputted may oscillate and has quite a long oscillation process. The link balancing parameters obtained by training during the oscillation process of the high-speed SerDes are quite different from those obtained in a normal state, directly leading to poor link eye diagram and even cause a Cyclic Redundancy Check (CRC) error. which cannot be corrected by an adaptive function.

### SUMMARY

A link balancing parameter training control circuit and a link balancing parameter training control method are provided according to embodiments of the present disclosure.

In an aspect of the present invention, the link balancing parameter training control circuit includes a signal stability detection module and a shielding control module, where the signal stability detection module is configured to perform stability detection on serial data received by a receiving end of a high-speed serial link, and the shielding control module is configured to, in response to unstable serial signal being detected by the detection module, control a balancing control module of the high-speed serial link to stop link balancing parameter training; the shielding control module is further configured to start timing after controlling the balancing control module to stop the link balancing parameter training, and control the balancing control module to start the link balancing parameter training in response to a timing value reaching a first preset duration t1; the shielding control module comprises a state latch module and a timing control module, the state latch module has an input connected to an output of the signal stability detection module, an output connected to a reset control end of the balancing control module and a reset control end of the timing control module respectively, and a reset control end connected to an output of the timing control module; the signal stability detection module is configured to send a first control signal representing signal being unstable to the state latch module in response to the unstable serial signal being detected; the state latch module is configured to send a first de-reset control signal to the timing control module to trigger the timing control module to start timing after receiving the first control signal, perform reset control on the balancing control module before receiving a second reset control signal from the timing control module, and terminate the reset control on the balancing control module in response to the second reset control signal being received; the timing control module is configured to start a current timing and disenable a reset function of the timing control module according to the first reset control signal, and send a second reset control signal to the state latch module in response to the timing value reaching the first preset duration t1; and the balancing control module in a reset state stops the link balancing parameter training.

In a second aspect of the disclosure, a high-speed serial link chip includes the link balancing parameter training control circuit described above.

In a third aspect of the disclosure, an electronic device includes the high-speed serial link chip described above.

According to the link balancing parameter training control circuit and the link balancing parameter training control method provided by embodiments of the present disclosure, the detection of stability on the serial data received by the receiving end of the high-speed serial link is carried out. Unstable serial data being detected indicates that there is oscillation in the currently received serial data, at this time the balancing control module of the high-speed serial link stops the link balancing parameter training, to avoid obtaining a non-optimal link balancing parameter by training during the unstable period of the serial data, i.e. avoiding the interference of the unstable signal of the high-speed serial link to the link balancing parameter training. Controlling the link balancing parameter training to be carried out during the stable period of the signal can provide a link balancing parameter as optimal as possible.

Other features and corresponding beneficial effects of the present disclosure are described in the latter part of the specification, and it should be appreciated that, at least part of the beneficial effects will become obvious from the description of the present disclosure.

### BRIEF DESCRIPTION OF DRAWINGS

FIG. 1 is a flowchart of a link balancing parameter training control method according to Embodiment I of the present disclosure;
Fig. 2 is a flowchart of a start process for control link balancing parameter training according to Embodiment I of the present disclosure;
Fig. 3 is a flowchart of another start process for control link balancing parameter training according to Embodiment I of the present disclosure;
Fig. 4 is a schematic diagram of a link balancing parameter training control circuit according to Embodiment I of the present disclosure;
Fig. 5 is a schematic diagram of a link balancing parameter training control circuit according to Embodiment II of the present disclosure;
Fig. 6 is a schematic diagram of a link balancing parameter training control circuit with a two-stage latch structure according to Embodiment II of the present disclosure;
Fig. 7 is a schematic diagram of a link balancing parameter training control circuit according to Embodiment III of the present disclosure;
Fig. 8 is a schematic diagram of a counting process for the link balancing parameter training control circuit shown in Fig. 7;
Fig. 9 is a schematic diagram of a link balancing parameter training control circuit with multiple SerDes according to Embodiment III of the present disclosure; and
Fig. 10 is a schematic diagram of a link balancing parameter training control circuit according to Embodiment IV of the present disclosure.

### DETAILED DESCRIPTION

To make the objectives, technical solutions and advantages of the present disclosure clearer, the following describes the embodiments of the present disclosure in further detail by specific embodiments with reference to the accompanying drawings. It should be understood that the specific embodiments described herein are merely intended to explain the present disclosure and are not intended to limit the present disclosure.

### Embodiment I

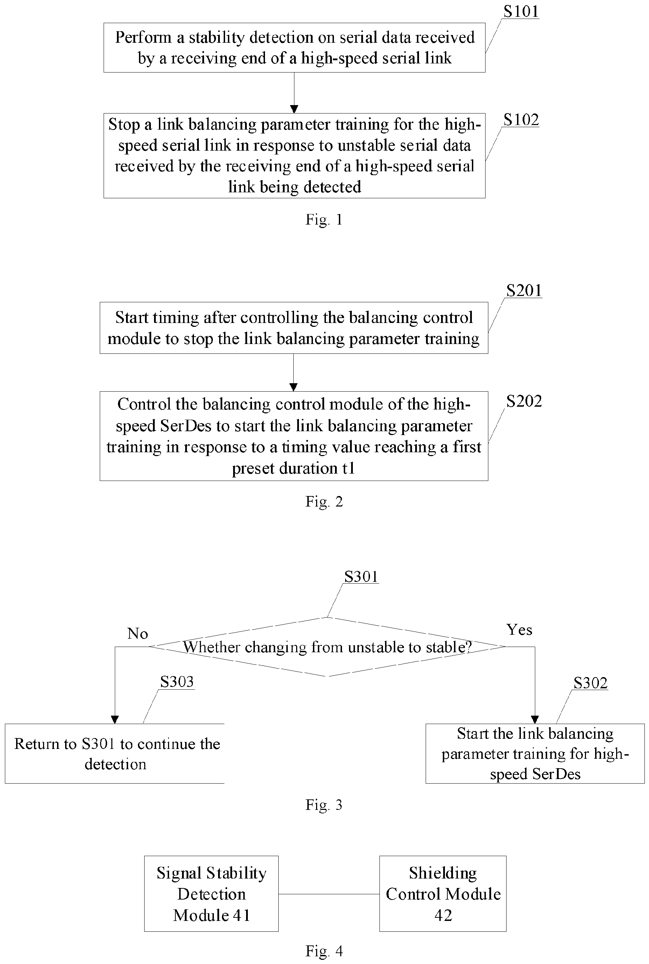

In view of the problem that in existing technologies the interference of unstable signal in a high-speed serial link to the link balancing parameter training may lead to failure in obtaining an optimal link balancing parameter, in this embodiment of the present disclosure a link balancing parameter training control method is provided, as shown in Fig. 1, including the following steps.

At S101, stability detection on serial data received by a receiving end of a high-speed serial link is performed.

It should be understood that, the detection of the stability of the serial data received by the high-speed serial link SerDes in S 101 may be implemented by at least one of additionally arranged hardware and software capable of performing the function, or may be implemented by at least one of a hardware and software capable of performing the detection function using the SerDes itself. Moreover, the method for stability detection on transmission data may vary according to specific application scenarios.

At S102, when it is detected that the serial data received by the receiving end of the high-speed SerDes is unstable, the link balancing parameter training for the high-speed serial link is stopped.

In this embodiment, a balancing control module used for the high-speed SerDes to perform the link balancing parameter training may be implemented according to needs, e.g., using a nonlinear equalizer to perform the link balancing parameter training.

By means of a detection control process shown in Fig. 1, the link balancing parameter training is not performed during an unstable period of the signal received by the receiving end of the high-speed SerDes, thereby avoiding a non-optimal link balancing parameter being obtained. In this embodiment, after the link balancing parameter training for the high-speed SerDes is controlled to stop, the step of controlling the link balancing parameter training for the high-speed SerDes to start may include at least one of the following implementations.

Implementation I: as shown in Fig. 2, following steps are included.

At S201, timing is started after the balancing control module of the high-speed SerDes is controlled to stop the link balancing parameter training.

At S202, when a timing value reaches a first preset duration t1, the balancing control module of the high-speed SerDes is controlled to start the link balancing parameter training.

Implementation II: as shown in Fig. 3, following steps are included.

At S301, it is detected whether the serial data received by the receiving end changes from unstable to stable, if so, proceed to S302; otherwise, proceed to S303.

At S302, the link balancing parameter training for the high-speed SerDes is controlled to start.

At S303, return to S301 to continue the detection.

Implementation III is a combination of the above-mentioned Implementation I and Implementation II, that is, when the timing value reaches a certain duration and when the unstable serial data received by the receiving end of the current SerDes is detected, the balancing control module of the high-speed SerDes is controlled to start the link balancing parameter training.

It should be understood that, which one of the above-mentioned implementations should be used to control the balancing control module of the high-speed SerDes to start the link balancing parameter training may be flexibly selected.

As shown by the above analysis, the link balancing parameter training control method in this embodiment may be implemented by at least one of hardware and software, may be at least partially implemented by an original functional module of the high-speed SerDes, or may be completely implemented by a newly added functional module. For a better understanding, the implementation of the above control process in this embodiment is illustrated in combination with a link balancing parameter training control circuit. As shown in Fig. 4, the link balancing parameter training control circuit in this embodiment includes a signal stability detection module 41 and a shielding control module 42.

The signal stability detection module 41 is configured to detect the stability of the serial data received by the receiving end of the high-speed SerDes.

As described above, the signal stability detection module 41 in this embodiment may be a newly added functional module, or may be implemented by an original functional module of the high-speed SerDes, for example, the signal stability detection module 41 may be implemented by using a Clock Data Recovery (CDR) module of the high-speed SerDes. The CDR module is an important part of the receiving end of the high-speed SerDes, which may retrieve a clock signal from the serial data and find an optimal sampling point of data through circuit adjustment, and of which performance has vital influence on the entire high-speed serial transmission system. The CDR module may implement a clock loss-of-lock detection. When the serial data received by the receiving end of the high-speed SerDes is unstable, a clock signal retrieved by the CDR module will be unstable as well, at this time the loss-of-lock detection will be logically reversed, for abnormal prompt. That is, in this embodiment, the CDR module may be configured to retrieved a clock signal from the serial data, and send a first control signal representing signal being unstable to prompt that the serial data received by the receiving end of the current high-speed SerDes is unstable when it is detected that the retrieved clock signal is unstable.

It should be understood that in this embodiment, the method for the CDR module to determine whether the clock signal is stable may also be flexibly set, for example, including but not limited to determine whether the clock signal is stable through at least one of the jitter and the skew of the clock signal.

The shielding control module 42 is configured to control the balancing control module of the high-speed SerDes to stop the link balancing parameter training when the signal stability detection module 41 detects the unstable serial data.

As described above, the shielding control module 42 in this embodiment may be implemented by hardware only or a combination of software and hardware. It should be understood that all functional modules capable of implementing the above functions may be used as the shielding control module 42 in this embodiment.

Therefore, by means of the link balancing parameter training control scheme provided by this embodiment, the balancing control module of the high-speed serial link is controlled to stop the link balancing parameter training in response to the unstable serial data being detected, thereby avoiding obtaining a non-optimal link balancing parameter through training during the unstable period of the serial data, and avoiding the interference of the unstable signal of the high-speed serial link to the link balancing parameter training. The link balancing parameter training is performed during a stable period of the signal, to obtain a link balancing parameter optimal as possible.

Furthermore, among various modules that can implement the link balancing parameter training control in this embodiment, at least some of the modules may use the existing functional modules of the high-speed SerDes, to further reduce complexity and lower costs for the control circuit. The scheme of the embodiment is simple and easy in implementation, and can further increase integration level.

### Embodiment II:

For a better understanding of the present disclosure, in this embodiment, the present disclosure is further illustrated, by taking the link balancing parameter training control circuit shown in Fig. 4 as an example, with a starting process of the link balancing parameter training for the high-speed SerDes shown in Fig. 2.

In this embodiment, the shielding control module 42 is further configured to start timing after the balancing control module is controlled to stop the link balancing parameter training, and control the balancing control module to start the link balancing parameter training in response to a timing value reaching the first preset duration t1.

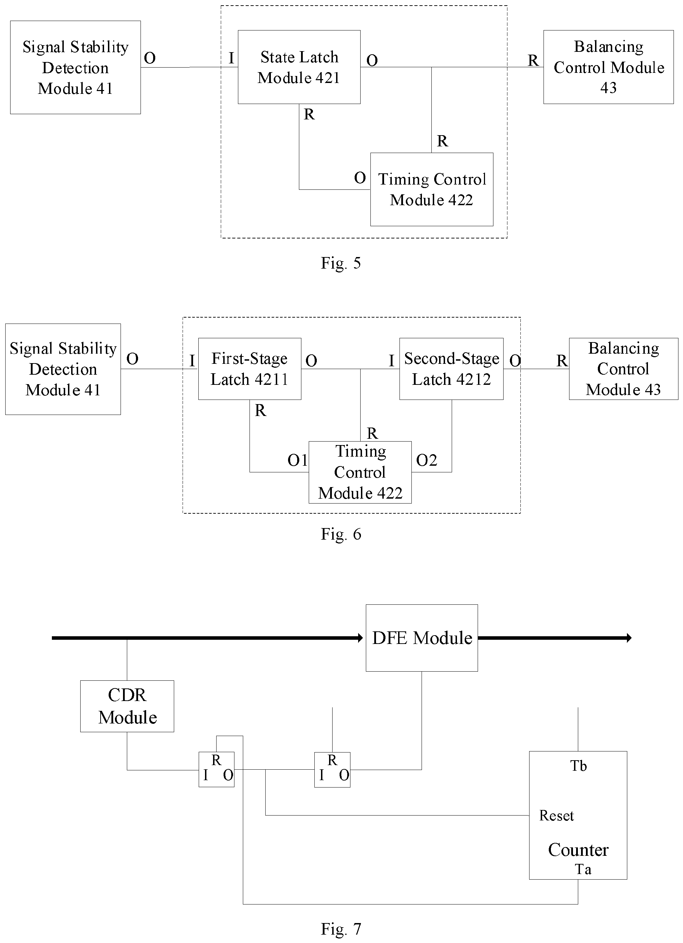

As shown in Fig. 5, I denotes inputs, O denotes outputs, and R denotes reset control ends. A timing control module 422 is in a reset state at ordinary times, in which state, the timing control module 422 disables its timing function (the timing function will be enabled after the timing control module 422 is de-reset). A state latch module 421 is in a de-reset state at ordinary times, in which state, while detecting a first control signal outputted from the signal stability detection module 41, the state latch module 421 keeps outputting a signal of a state all the time to keep performing a reset control on a balancing control module 43, until the state latch module 421 changes the state of the signal after de-reset to perform a de-reset control on the balancing control module 43. The balancing control module 43 is in a de-reset state at ordinary times, in which state the balancing control module 43 can perform the link balancing parameter training, but the balancing control module 43 stops the link balancing parameter training when the balancing control module 43 is in a reset state.

As shown in Fig. 5, in this example, an input of the state latch module 421 is connected to an output of the signal stability detection module 41, and an output of the state latch module 421 is connected to a reset control end of the balancing control module 43 and a reset control end of the timing control module 422 respectively; and an output of the timing control module 422 is connected to a reset control end of the state latch module 421, where:
- in response to the unstable serial data received by the receiving end of the high-speed SerDes being detected, the signal stability detection module 41 sends a first control signal representing signal being unstable to the state latch module, for example, outputting "1";
- after receiving the first control signal, the state latch module 421 sends a first de-reset control signal to the timing control module 422 to trigger the timing control module 422 to start timing, and performs reset control on the balancing control module 43 to control the balancing control module 43 to stop the link balancing parameter training before receiving a second reset control signal from the timing control module 422; the state latch module 421 is further configured to terminate the reset control performed on the balancing control module 43 after receiving the second reset control signal sent by the timing control module 422, so at this time, the balancing control module 43 is in a de-reset state, and allows the link balancing parameter training to be performed; and
- the timing control module 422 is configured to start a current timing and disenable its reset function according to the first de-reset control signal sent by the state latch module 421 (before enabling the reset function, the timing control module performs the current timing only, and cannot be triggered to perform a new round of timing), and send a second reset control signal to the state latch module 421 in response to the timing value reaching the first preset duration t1.

In this embodiment, to quickly detect whether the serial data received by the receiving end of the high-speed SerDes is stable, in turn to carry out a quick trigger of a next round of locking, the state latch module 421 in this embodiment may be implemented as a multi-stage latch. For a better understanding, the implantation of a two-stage latch is taken as an example, as shown in Fig. 6, the state latch module 421 includes a first-stage latch 4211 and a second-stage latch 4212. An input of the first-stage latch 4211 is connected to the output of the signal stability detection module 41, and an output of the first-stage latch 4211 is connected to an input of the second-stage latch 4212 and the reset control end of the timing control module 422 respectively. The output of the second-stage latch 4212 is connected to the reset control end of the balancing control module 43. The timing control module 422 has a first output O1 and a second output O2 respectively connected to a reset control end of the first-stage latch 4211 and a reset control terminal of the second-stage latch 4212.

After receiving the first control signal, the first-stage latch 4211 sends a first de-reset control signal to the timing control module 422 to trigger the timing control module 422 to start timing, and keeps sending the first control signal to the second-stage latch 4212 before receiving a second reset control signal from the timing control module 422. The first-stage latch 4211 is further configured to stop sending the first control signal to the second-stage latch 4212 in response to the second reset control signal sent by the timing control module 422 being received.

The second-stage latch 4212 is configured to keep performing reset control on the balancing control module 43 after receiving the first control signal and before receiving the second reset control signal from the timing control module 422, and is configured to terminate the reset control performed on the balancing control module 43 in response to the second reset control signal sent by the timing control module 422 being received.

The timing control module 422 is configured to, after the current timing is started according to the first reset control signal, send a second reset control signal to the first-stage latch 4211 in response to the timing value reaching a first preset sub-duration t11 and send a second reset control signal to the second-stage latch 4212 in response to the timing value reaching t1 which is a sum of the first preset sub-duration t11 and a second preset sub-duration t12, i.e. t1= t11+t12. In this way, when the timing value reaches 11, if the unstable serial data received by the receiving end of the high-speed SerDes has been detected during the period from t11 to t12, the second-stage latch 4212 is triggered immediately to perform the reset control on the balancing control module 43, and the timing control module 422 is triggered to perform a next round of timing.

In this embodiment, the timing control module 422 may re-enable its reset function when the timing value reaches t1. In this case, the timing control module 422 can be triggered to start the next timing only after the current round of timing is completed. However, in this embodiment, the timing control module 422 may also enable the reset function before the timing value reaches t1, at this time the timing control module 422 is in a process of performing the current timing. When the signal stability detection module 41 detects that the serial data received by the receiving end of the high-speed SerDes is unstable again and outputs the first control signal during the current timing, the timing control module 422 will be immediately triggered to perform a new round of timing. In addition, the second-stage latch 4212 may keep performing reset control on the balancing control module 43 all the time. Only when the serial data received by the receiving end of the high-speed SerDes keeps stable during the current timing after t11, the second-stage latch 4212 is reset, and thus the reset control performed on the balancing control module 43 is terminated. For example, in this embodiment, the timing control module 422 is configured to enable the reset function at t13, where t13 may be greater than or equal to t11 and less than or equal to t1. In this example t13 is greater than t11 and less than t1, and the timing control module 422 is further configured to enable the reset function when the timing value reaches a third preset sub-duration t13 after the second reset control signal is sent to the first-stage latch 4211, and perform a new round of timing in response to the first reset control signal being received before the timing value reaches t1, i.e., during a period from t11+t13 to 11). This control method is also a specific example of the third method of Embodiment I.

Therefore, the link balancing parameter training control circuit provided in this embodiment has a simple structure with high accuracy and reliability, and can reduce the complexity and costs of the control circuit while obtaining an optimal link balancing parameter.

### Embodiment III:

Considering that the high-speed SerDes generally operate in a multiplex mode, in order to save device resources, reduce circuit size and lower costs, in this embodiment, multiple high-speed SerDes are allowed to share one OR gate circuit and one timing control module to implement the control on the link balancing parameter training of the multiple high-speed SerDes.

That is, in this embodiment, the link balancing parameter training control circuit may include at least two pairs of the signal stability detection module and state latch module, where one state latch module and one signal stability detection module correspond to one high-speed SerDes. The link balancing parameter training control circuit may further include an OR gate control circuit with multiple inputs and one output, where outputs of the state latch modules corresponding to respective high-speed SerDes are connected to the inputs of the OR gate control circuit respectively, the output of the OR gate control circuit is connected to a reset control end of the timing control module, and a timing start output of the timing control module is connected to a reset control end of the OR gate control circuit.

After receiving the first control signal, the state latch module of one of the high-speed SerDes sends a first de-reset control signal to the timing control module through the OR gate control circuit to trigger the timing control module to start timing. The state latch module further sends a reset control signal to the OR gate control circuit through a timing start output o perform reset control on the OR gate control circuit after the timing control module starts iming and before the current timing ends, and sends a third de-reset control signal to the OR gate control circuit to terminate the reset control performed on the OR gate control circuit after he current timing ends.

For a better understanding, in this embodiment, the present disclosure is illustrated below by a specific application circuit. As shown in Fig. 7, the application circuit is of a specific circuit structure for implementing the circuit shown in Fig. 6, where the signal stability detection module 41 is implemented by a CDR module, the control balancing control module 43 is implemented by a DFE module, and the timing control module 422 is implemented by a counter. That is, Fig. 7 is a schematic diagram of a circuit applicable to a single high-speed SerDes provided by this embodiment. The circuits are connected according to Fig. 7. The CDR module of the SerDes s has a pin for clock locking state detection output, which is connected to an input of the first latch (i.e., the first-stage latch), an output of the first latch is connected to an input of the second latch (i.e., the second-stage latch), and an output of the second latch is connected to a reset pin of the DFE module.

The reset end of the first latch of the high-speed SerDes is controlled by one output of the counter (i.e., the output denoted by Ta in the figure), and the second latch is controlled by another output of the counter (i.e., the output denoted by Tb in the figure). The output of the first latch (the input of the second latch) is connected to a reset pin that controls a timer.

In a configurable default state, the CDR loss-of-lock detection output is "0", that is, there is no loss of lock, and thus the outputs of the two latches in the link are both "0". The DFE module is in a de-reset state; the counter is reset, and the high-speed SerDes operates normally.

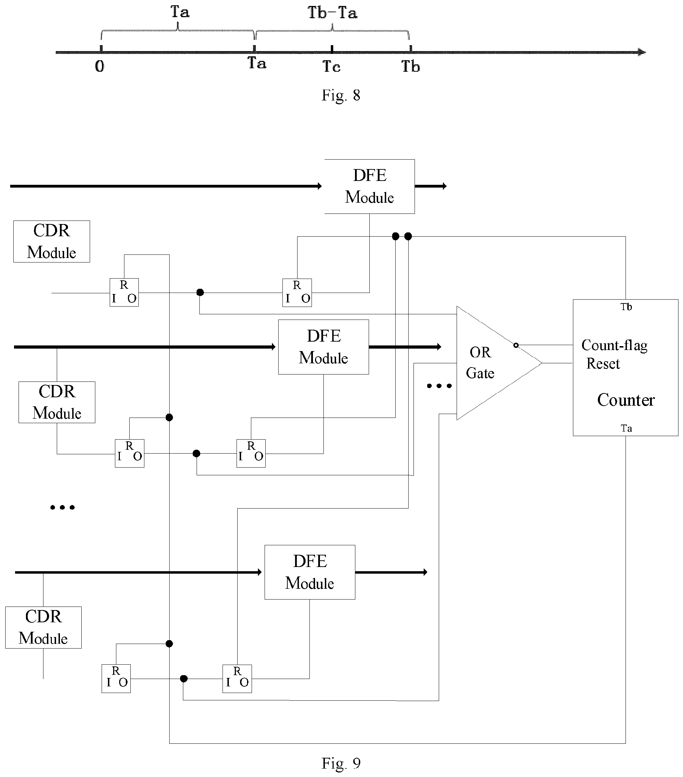

If the CDR module of the high-speed SerDes is in a loss-of-locks state, the detection pin has an output of " 1" (i.e., a first control signal), and the two latches in the link latch the state "1". The DFE module is reset; the counter is de-reset to start counting, and disenables its reset function before completing the current counting. As shown in Fig. 8, the time to start the counting is set as 0. One output of the counter resets the first latch of the link (i.e. outputting the second reset control signal) when the timing value reaches Ta. The counting is completed when the counter counts from (Tb-Ta) to the set time T3, and another output of the counter resets the second latch of the link and de-resets the DFE module.

In this example, one counting has a duration of Tb. In the above example, in the time period of 0-Ta, a loss-of-lock alarm of the CDR module of the SerDes may be ignored, without causing the counter to re-count, and the counter will complete the current counting only. In a following time period of Tb-Ta after Ta, the loss-of-lock alarm of the CDR module of the SerDes will be recorded, and the counter will be re-triggered to perform a second counting after the current counting is completed. In this example, there is a link in a loss-of-lock state, and the DFE module remains in a reset state, that is, a function of blocking the unstable signals out is achieved.

As shown in Fig. 9, which is a schematic diagram of a circuit applicable to multiple high-speed SerDes in the embodiment. To save device resources and reduce circuit size, each SerDes merely uses two latch circuits, while multiple SerDes share one OR gate circuit and one counter circuit.

Circuits are connected according to Fig. 9, where the CDR module of each SerDes outputs a pin for clock locking state detection, which is connected to the input of the first latch, the output of the first latch is connected to the input of the second latch, and the output of the second latch is connected to a reset pin of the DFE module.

The reset end of the first latch of each high-speed SerDes is controlled by one output of the counter, and the second latch is controlled by the other output of the counter.

The output of the first latch (the input of the second latch) of each high-speed SerDes is connected to an input of the OR gate circuit, an output of OR gate circuit controls a reset pin of the timer, and a start counting pin of the counter controls the reset pin of the OR gate circuit.

In a default state, the CDR has a loss-of-lock detection output of "0", that is, there is no loss of lock, and the outputs of the two latches in each link are both "0". The DFE module is in a de-reset state, The OR gate output is "0", the counter is reset, the OR gate circuit is in a de-reset state, and each high-speed SerDes operates normally.

Once the CDR module of a link is in a loss-of-lock state, the detection pin has an output of "1" (i.e., a first control signal), and the two latches in the link latch the state "1". The DFE module is reset, and the OR gate circuit has an output of "1". The counter is de-reset to start counting, a count flag resets the OR gate circuit, and the time to start counting is set as t1. When the counter reaches a set time T2, one output of the counter resets the first latches of the links. When the counter counts to a set time T3, the counting is completed, and the other output of the counter resets the second latches of the links and de-resets the OR gate circuit.

Therefore, in the circuit structure shown in Fig. 9, a two-stage latch is implemented for each high-speed SerDes, the output of the second latch is connected to the reset pin of the DFE module. When a loss-of-lock phenomenon occurs, the DFE module is reset. The reset end of the first latch of each high-speed SerDes is controlled by one output of the counter, and the second latch is controlled by the other output of the counter, thereby to achieve a function of resetting two latches respectively at different time points during one counting period. The two latches in each high-speed SerDes are designed to ensure the CDR loss-of-lock state in each high-speed SerDes being retained during the period of the common counter being occupied, and a next counting being triggered after this counting is completed. As shown in the above example, a control process includes: the two latches in each link are respectively controlled by the outputs of the counter, when the counter reaches a first preset point, the first latch in the link is reset; all the losses of lock in this time period only trigger the counter for the current counting, and when the counter completes the current counting, the second latch in the link is reset and the OR gate circuit is de-reset. If a new link comes into the CDR loss-of-lock state in this time period, the loss-of-lock state is latched in the first latch again, and after the counter completes the current counting, the counter is triggered again to start a new counting and the DFE module of the link is reset.

During the counting of the counter, there is a link in a CDR loss-of-lock state, and the DFE module is always in a reset state. After the counting delay, the CDR loss-of-lock state is re-checked until the CDR is locked, the DFE module is unlocked, and therefore the effect of shielding unstable signals is achieved.

Compared with the existing technologies, the link balancing parameter training control circuit provided in this embodiment has the advantages that the effect of shielding unstable signals at the initial stage of link establishment of the SerDes is achieved, the defect of poor DFE training parameters caused by unstable signals is effectively overcome, device resources are saved, the circuit size is reduced, and costs are lowered.

### Embodiment IV:

For a better understanding of the present disclosure, in this embodiment, as described in Method II of Embodiment I, when it is detected that the serial data changes from unstable to stable, the method for controlling the balancing control module of the high-speed SerDes to start the link balancing parameter training is illustrated.

At this time, in this embodiment, the signal stability detection module is further configured to send a second control signal representing signal being stable to the shielding control module in response to the stale serial data being detected.

The shielding control module is further configured to control the balancing control module of the high-speed SerDes to start the link balancing parameter training in the case where the balancing control module is in a state of stopping the link balancing parameter training and receives the second control signal.

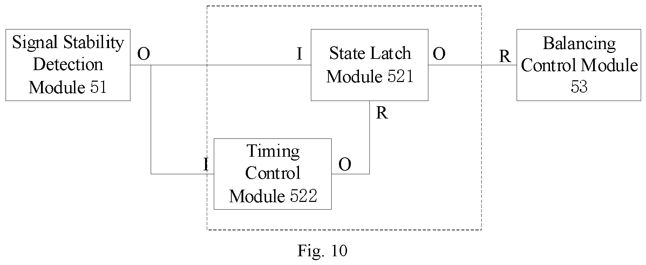

In addition, in order to avoid frequent switching between reset and de-reset to the balancing control module, in this embodiment, by the shielding control module, controlling the balancing control module of the high-speed serial link to start the link balancing parameter training according to the second control signal includes: detecting whether the first control signal is received within a second preset duration t2 after receiving the second control signal, and if not, controlling the balancing control module of the high-speed serial link to start the link balancing parameter training; otherwise, restarting a new round of t2 duration detection timing. For a better understanding, this embodiment will be illustrated below by a circuit structure as shown in Fig. 10, which includes a signal stability detection module 51, a shielding control module, and a balancing control module 53, where the shielding control module includes a state latch module 521 and a timing control module 522, and the balancing control module 53 may be of the same structure as the shielding control module shown in the above figures.

In this embodiment, the signal stability detection module 51 sends a first control signa in response to the unstable serial data received by the receiving end of the high-speed SerDes being detected. The state latch module 521 is in a de-reset state at ordinary times, and keeps performing reset control on the balancing control module 53 after receiving the first control signal, and at this time, the balancing control module 53 stops the link balancing parameter training. The timing control module 522 does not perform any processing job in response to the first control signal being received. The subsequent signal stability detection module 51 sends a second control signal in response to the changing from unstable to stable of the serial data received by the receiving end of the high-speed SerDes being detected, and the state latch module 521 receives the second control signal without altering its output state. The timing control module 522 triggers timing in response to the second control signal being received, and triggers re-timing in response to the first control signal sent by the signal stability detection module 51 being received during a process of the timing value reaching t2. On the contrary, if during a process of the timing value reaching t2, the first control signal has not been received, a reset control signal for resetting the state latch module 521 is outputted. After the state latch module 521 is reset, the reset control performed on the balancing control module 53 is terminated, and the link balancing parameter training can be performed by the balancing control module 53.

In addition, it should be understood that, in this embodiment, t2 may be 0, in this case the shielding control module is in a state where the balancing control module stops the link balancing parameter training. The shielding control module can immediately control the balancing control module of the high-speed SerDes to start the link balancing parameter training in response to the second control signal being received.

It should be understood that, each of the modules shown in Fig. 10 may be specifically implemented by various combinations of hardware or software, which will not be described in detail here.

In this embodiment, by means of the link balancing parameter training control circuit shown in Fig. 10, the unstable signals emerge at an initial stage of link establishment of the SerDes are blocked out, the defect of poor DFE training parameters caused by unstable signals is effectively overcome, whereby device resources are saved, the circuit size is reduced, and costs are lowered.

### Embodiment V:

In this embodiment a high-speed SerDes chip is provided. The high-speed SerDes chip includes the link balancing parameter training control circuit described in each of the above embodiments. It should be understood that, the high-speed SerDes chip in this embodiment may be any chip that needs a SerDes link for signal transmission in various application scenarios.

In this embodiment an electronic device is further provided, the electronic device includes the high-speed SerDes chip as described above.

It will be apparent to those skilled in the art that the modules or steps of the above-described embodiments of the present disclosure may be implemented by a general-purpose computing device, which may be centralized on a single computing device, or distributed over a network formed by a plurality of computing devices, and optionally may be implemented by program code executable by the computing device, so that the program code may be stored in a computer storage medium (ROM/RAM, magnetic disk, optical disk) and executed by the computing device. In some cases the steps shown or described steps may be implemented in a sequence different from that herein, and the modules may be implemented by being separately manufactured as individual integrated circuit modules, or some of the modules or steps are implemented by being manufactured into an individual integrated circuit module. Therefore, the present disclosure is not limited to any specific combination of hardware and software.

The foregoing contents are further detailed descriptions of the present disclosure with reference to specific embodiments, and it is not intended to limit the present disclosure to these descriptions.

## Claims

1. A link balancing parameter training control circuit, comprising a signal stability detection module (41) and a shielding control module (42), wherein:
the signal stability detection module (41) is configured to perform stability detection on serial data received by a receiving end of a high-speed serial link; and
the shielding control module (42) is configured to, in response to unstable serial signal being detected by the detection module (41), control a balancing control module (43) of the high-speed serial link to stop link balancing parameter training;
wherein the shielding control module (42) is further configured to start timing after controlling the balancing control module (43) to stop the link balancing parameter training, and control the balancing control module (43) to start the link balancing parameter training in response to a timing value reaching a first preset duration t1;
**characterized in that**, the shielding control module (42) comprises a state latch module (421) and a timing control module (422), wherein:
the state latch module (421) has an input connected to an output of the signal stability detection module (41), an output connected to a reset control end of the balancing control module (43) and a reset control end of the timing control module (422) respectively, and a reset control end connected to an output of the timing control module (422);
the signal stability detection module (41) is configured to send a first control signal representing signal being unstable to the state latch module (421) in response to the unstable serial signal being detected;
the state latch module (421) is configured to send a first de-reset control signal to the timing control module (422) to trigger the timing control module (422) to start timing after receiving the first control signal, perform reset control on the balancing control module (43) before receiving a second reset control signal from the timing control module (422), and terminate the reset control on the balancing control module (43) in response to the second reset control signal being received;
the timing control module (422) is configured to start a current timing and disenable a reset function of the timing control module (422) according to the first reset control signal, and send a second reset control signal to the state latch module (421) in response to the timing value reaching the first preset duration t1; and
the balancing control module (43) in a reset state stops the link balancing parameter training.

2. The link balancing parameter training control circuit of claim 1, wherein the state latch module (421) comprises a first-stage latch (4211) and a second-stage latch (4212), wherein:
the first-stage latch (4211) has an input connected to an output of the signal stability detection module (41), an output connected to an input of the second-stage latch (4212) and the reset control end of the timing control module (422) respectively; the second-stage latch (4212) has an output connected to the reset control end of the balancing control module (43); the timing control module (422) comprises a first output and a second output respectively connected to a reset control end of the first-stage latch (4211) and a reset control end of the second-stage latch (4212);
the first-stage latch (4211) is configured to send a first de-reset control signal to the timing control module (422) to trigger the timing control module (422) to start timing after receiving the first control signal, keep sending the first control signal to the second-stage latch (4212) before receiving a second reset control signal from the timing control module (422), and stop sending the first control signal to the second-stage latch (4212) in response to the second reset control signal being received;
the second-stage latch (4212) is configured to perform reset control on the balancing control module (43) after receiving the first control signal and before receiving the second reset control signal from the timing control module (422), and terminate the reset control on the balancing control module (43) in response to the second reset control signal being received; and
the timing control module (422) is configured to, after starting a current timing according to the first reset control signal, send a second reset control signal to the first-stage latch (4211) in response to the timing value reaching a first preset sub-duration t11 and send a second reset control signal to the second-stage latch (4212) in response to the timing value reaching a sum of the first preset sub-duration t11 and a second preset sub-duration t12, wherein t1=t11+t12.

3. The link balancing parameter training control circuit of claim 2, wherein the timing control module (422) is further configured to enable the reset function of the timing control module (422) in response to the timing value reaching a third preset sub-duration t13 after sending the second reset control signal to the first-stage latch (4211), and perform a new round of timing in response to the first reset control signal being received before the timing value reaches the t1; and
the third preset sub-duration t13 is greater than or equal to the t11, and less than the t1.

4. The link balancing parameter training control circuit of claim 1, wherein, the circuit comprises at least two ways of the signal stability detection module (41) and the state latch module (421), each way comprising one state latch module (421) and one signal stability detection module (41) corresponding to one high-speed serial link;
the link balancing parameter training control circuit further comprises an OR gate control circuit having a plurality of inputs and one output, wherein the outputs of the state latch modules (421) corresponding to respective high-speed serial links are connected to the inputs of the OR gate control circuit respectively, the output of the OR gate control circuit is connected to the reset control end of the timing control module (422), and the OR gate control circuit further has a reset control end connected to a timing start output of the timing control module (422); and
the state latch module (421) of one of the high-speed serial links is configured to send a first de-reset control signal to the timing control module (422) through the OR gate control circuit to trigger the timing control module (422) to start timing, after receiving the first control signal; and the timing control module (422) is configured to send a reset control signal to the OR gate control circuit through the timing start output to perform reset control on the OR gate control circuit, after starting the timing and before the current timing ends, and send a third de-reset control signal to the OR gate control circuit to terminate the reset control on the OR gate control circuit after the current timing ends.

5. The link balancing parameter training control circuit of claim 1, wherein, the signal stability detection module (41) is further configured to send a second control signal representing signal being stable to the shielding control module (42) in response to stable serial data being detected; and
the shielding control module (42) is configured to control the balancing control module (43) of the high-speed serial link to start the link balancing parameter training in response to the balancing control module (43) being in a state of stopping the link balancing parameter training and in response to the second control signal being received.

6. The link balancing parameter training control circuit of claim 5, wherein controlling, by the shielding control module (42), the balancing control module (43) of the high-speed serial link to start the link balancing parameter training according to the second control signal comprises: detecting whether the first control signal is received within a second preset duration t2 after the second control signal is received; and if the first control signal is not received, controlling the balancing control module (43) of the high-speed serial link to start the link balancing parameter training.

7. The link balancing parameter training control circuit of one of claims 1-6, wherein, the signal stability detection (41) module is a clock data recovery module; and
the clock data recovery module is configured to retrieve a clock signal from the serial data, and send a first control signal representing signal being unstable in response to an unstable signal being detected.

8. A high-speed serial link chip, **characterized by** comprising the link balancing parameter training control circuit of one of claims 1-7.

9. An electronic device, **characterized by** comprising the high-speed serial link chip of claim 8.

## Patentansprüche

1. Steuerschaltung für ein Link-Balancing-Parametertraining, umfassend ein Signalstabilitätsdetektionsmodul (41) und ein Shieldingsteuermodul (42), wobei:
das Signalstabilitätsdetektionsmodul (41) dazu konfiguriert ist, eine Stabilitätsdetektion auf seriellen Daten durchzuführen, die durch ein Empfangsende eines seriellen Hochgeschwindigkeitslinks empfangen werden; und
das Shieldingsteuermodul (42) dazu konfiguriert ist, in Antwort auf die Detektion eines instabilen seriellen Signals durch das Detektionsmodul (41) ein Balancingsteuermodul (43) des seriellen Hochgeschwindigkeitslinks dazu zu steuern, das Link-Balancing-Parametertraining zu stoppen;
wobei das Shieldingsteuermodul (42) ferner dazu konfiguriert ist, ein Timing nach der Steuerung des Balancingsteuermoduls (43) zu starten, um das Link-Balancing-Parametertraining zu stoppen, und das Balancingsteuermodul (43) dazu zu steuern, das Link-Balancing-Parametertraining in Antwort darauf zu starten, dass ein Timingwert eine erste voreingestellte Dauer t1 erreicht;
**dadurch gekennzeichnet, dass** das Shieldingsteuermodul (42) ein Zustandslatchmodul (421) und ein Timingsteuermodul (422) umfasst, wobei:
das Zustandslatchmodul (421) einen Eingang hat, der mit einem Ausgang des Signalstabilitätsdetektionsmoduls (41) verbunden ist, einen Ausgang, der mit einem Resetsteuerende des Balancingsteuermoduls (43) beziehungsweise einem Resetsteuerende des Timingsteuermoduls (422) verbunden ist, und ein Resetsteuerende, das mit einem Ausgang des Timingsteuermoduls (422) verbunden ist;
das Signalstabilitätsdetektionsmodul (41) dazu konfiguriert ist, ein erstes Steuersignal, das ein instabiles Signal repräsentiert, an das Zustandslatchmodul (421) in Antwort darauf zu senden, dass das instabile serielle Signal detektiert wird;
das Zustandslatchmodul (421) dazu konfiguriert ist, ein erstes Deresetsteuersignal an das Timingsteuermodul (422) zu senden, um das Timingsteuermodul (422) dazu zu triggern, das Timing nach dem Empfang des ersten Steuersignals zu starten, eine Resetsteuerung auf dem Balancingsteuermodul (43) vor dem Empfang eines zweiten Resetsteuersignals von dem Timingsteuermodul (422) durchzuführen, und die Resetsteuerung auf dem Balancingsteuermodul (43) in Antwort darauf zu beenden, dass das zweite Resetsteuersignal empfangen wird;
das Timingsteuermodul (422) dazu konfiguriert ist, ein momentanes Timing zu starten und eine Resetfunktion des Timingsteuermoduls (422) entsprechend dem ersten Resetsteuersignal zu deaktivieren, und ein zweites Resetsteuersignal an das Zustandslatchmodul (421) in Antwort darauf zu senden, dass der Timingwert die erste voreingestellte Dauer t1 erreicht; und
das Balancingsteuermodul (43) in einem Resetzustand das Link-Balancing-Parametertraining stoppt.

2. Steuerschaltung für ein Link-Balancing-Parametertraining nach Anspruch 1, wobei das Zustandslatchmodul (421) einen Latch (4211) erster Stufe und einen Latch (4212) zweiter Stufe umfasst, wobei:
der Latch (4211) erster Stufe einen Eingang hat, der mit einem Ausgang des Signalstabilitätsdetektionsmoduls (41) verbunden ist, einen Ausgang, der mit einem Eingang des Latches (4212) zweiter Stufe beziehungsweise dem Resetsteuerende des Timingsteuermoduls (422) verbunden ist; der Latch (4212) zweiter Stufe einen Ausgang hat, der mit dem Resetsteuerende des Balancingsteuermoduls (43) verbunden ist; das Timingsteiermodul (422) einen ersten Ausgang und einen zweiten Ausgang umfasst, die mit einem Resetsteuerende des Latches (4211) erster Stufe beziehungsweise einem Resetsteuerende des Latches (4212) zweiter Stufe verbunden sind;
der Latch (4211) erster Stufe dazu konfiguriert ist, eine erstes Deresetsteuersignal an das Timingsteuermodul (422) zu senden, um das Timingsteuermodul (422) dazu zu triggern, ein Timing nach dem Empfang des ersten Steuersignals zu starten, das Senden des ersten Steuersignals an den Latch (4212) zweiter Stufe vor dem Empfang eines zweiten Resetsteuersignals von dem Timingsteuermodul (422) beizubehalten, und das Senden des ersten Steuersignals an den Latch (4212) zweiter Stufe in Antwort darauf zu stoppen, dass das zweite Resetsteuersignal empfangen wird;
der Latch (4212) zweiter Stufe dazu konfiguriert ist, eine Resetsteuerung auf dem Balancingsteuermodul (43) nach dem Empfang des ersten Steuersignals und vor dem Empfang des zweiten Resetsteuersignals von dem Timingsteuermodul (422) durchzuführen, und die Resetsteuerung auf dem Balancingsteuermodul (43) in Antwort darauf zu beenden, dass das zweite Resetsteuersignal empfangen wird; und
das Timingsteuermodul (422) dazu konfiguriert ist, nach dem Start eines momentanen Timings entsprechend dem ersten Resetsteuersignal ein zweites Resetsteuersignal an den Latch (4211) erster Stufe in Antwort darauf zu senden, dass der Timingwert eine erste voreingestellte Teildauer t11 erreicht, und ein zweites Resetsteuersignal an den Latch (4212) zweiter Stufe in Antwort darauf zu senden, dass der Timingwert eine Summe der ersten voreingestellten Teildauer t11 und einer zweiten voreingestellten Teildauer t12 erreicht, wobei t1 = t11 + t12.

3. Steuerschaltung für ein Link-Balancing-Parametertraining nach Anspruch 2, wobei das Timingsteuermodul (422) ferner dazu konfiguriert ist, die Resetfunktion des Timingsteuermoduls (422) in Antwort darauf zu aktivieren, dass der Timingwert eine dritte voreingestellte Teildauer t13 nach dem Senden des zweiten Resetsteuersignals an den Latch (4211) erster Stufe erreicht, und eine neue Timingrunde in Antwort darauf durchzuführen, dass das erste Resetsteuersignal empfangen wird, bevor der Timingwert das t1 erreicht; und
die dritte voreingestellte Teildauer t13 größer oder gleich dem t11 und kleiner als das t1 ist.

4. Steuerschaltung für ein Link-Balancing-Parametertraining nach Anspruch 1, wobei die Schaltung wenigstens zwei Wege des Signalstabilitätsdetektionsmoduls (41) und des Zustandslatchmoduls (421) umfasst, wobei jeder Weg ein Zustandslatchmodul (421) und ein Signalstabilitätsdetektionsmodul (41) entsprechend einem seriellen Hochgeschwindigkeitslink umfasst;
wobei die Steuerschaltung für ein Link-Balancing-Parametertraining ferner eine ODER-Gattersteuerschaltung umfasst, die eine Mehrzahl von Eingängen und einen Ausgang hat, wobei die Ausgänge der Zustandslatchmodule (421) entsprechend jeweiligen seriellen Hochgeschwindigkeitslinks jeweils mit den Eingängen der ODER-Gattersteuerschaltung verbunden sind, wobei der Ausgang der ODER-Gattersteuerschaltung mit dem Resetsteuerende des Timingsteuermoduls (422) verbunden ist, und wobei die ODER-Gattersteuerschaltung ferner ein Resetsteuerende hat, das mit einem Timingstartausgang des Timingsteuermoduls (422) verbunden ist; und
das Zustandslatchmodul (421) von einem der seriellen Hochgeschwindigkeitslinks dazu konfiguriert ist, ein erstes Deaktivierungssteuersignal an das Timingsteuermodul (422) durch die ODER-Gattersteuerschaltung zu senden, um das Timingsteuermodul (422) dazu zu triggern, das Timing zu starten, nachdem das erste Steuersignal empfangen wurde; und das Timingsteuermodul (422) dazu konfiguriert ist, ein Resetsteuersignal an die ODER-Gattersteuerschaltung durch den Timingstartausgang zu senden, um eine Resetsteuerung auf der ODER-Gattersteuerschaltung durchzuführen, nachdem das Timing gestartet wurde und bevor das momentane Timing endet, und ein drittes Deaktivierungssteuersignal an die ODER-Gattersteuerschaltung zu senden, um die Resetsteuerung auf der ODER-Gattersteuerschaltung zu beenden, nachdem das momentane Timing endet.

5. Steuerschaltung für ein Link-Balancing-Parametertraining nach Anspruch 1, wobei das Signalstabilitätsdetektionsmodul (41) ferner dazu konfiguriert ist, ein zweites Steuersignal, das ein stabiles Signal repräsentiert, an das Shieldingsteuermodul (42) in Antwort darauf zu senden, dass stabile serielle Daten detektiert werden; und
das Shieldingsteuermodul (42) dazu konfiguriert ist, das Balancingsteuermodul (43) des seriellen Hochgeschwindigkeitslinks dazu zu steuern, das Link-Balancing-Parametertraining in Antwort darauf zu starten, dass das Balancingsteuermodul (43) in einem Zustand des Stoppens des Link-Balancing-Parametertrainings ist, und in Antwort darauf, dass das zweite Steuersignal empfangen wird.

6. Steuerschaltung für ein Link-Balancing-Parametertraining nach Anspruch 5, wobei die Steuerung, durch das Shieldingsteuermodul (42), des Balancingsteuermoduls (43) des seriellen Hochgeschwindigkeitslinks zum Starten des Link-Balancing-Parametertrainings entsprechend dem zweiten Steuersignal Folgendes umfasst: Detektieren, ob das erste Steuersignal innerhalb einer zweiten voreingestellten Dauer t2 nach dem Empfang des zweiten Steuersignals empfangen wird; und wenn das erste Steuersignal nicht empfangen wird, Steuern des Balancingsteuermoduls (43) des seriellen Hochgeschwindigkeitslinks derart, dass das Link-Balancing-Parametertraining gestartet wird.

7. Steuerschaltung für ein Link-Balancing-Parametertraining nach einem der Ansprüche 1 bis 6, wobei das Signalstabilitätsdetektionsmodul (41) ein Taktdatenrückgewinnungsmodul ist; und
das Taktdatenrückgewinnungsmodul dazu konfiguriert ist, ein Taktsignal von den seriellen Daten zu erlangen und ein erstes Steuersignal, das ein instabiles Signal repräsentiert, in Antwort darauf zu senden, dass ein instabiles Signal detektiert wird.

8. Serieller Hochgeschwindigkeitslinkchip, **dadurch gekennzeichnet, dass** er die Steuerschaltung für ein Link-Balancing-Parametertraining nach einem der Ansprüche 1 bis 7 umfasst.

9. Elektronische Vorrichtung, **dadurch gekennzeichnet, dass** sie den seriellen Hochgeschwindigkeitslinkchip nach Anspruch 8 umfasst.

## Revendications

1. Un circuit de commande d'apprentissage de paramètres d'équilibrage de liaison, comprenant un module (41) de détection de stabilité de signal et un module (42) de commande de protection, dans lequel :
le module (41) de détection de stabilité de signal est configuré pour effectuer une détection de stabilité sur des données série reçues par une extrémité de réception d'une liaison série à grande vitesse ; et
le module (42) de commande de protection est configuré pour, en réponse à la détection d'un signal série instable par le module de détection (41), commander un module (43) de commande d'équilibrage de la liaison série à grande vitesse afin d'arrêter l'apprentissage des paramètres d'équilibrage de liaison ;
le module (42) de commande de protection étant en outre configuré pour démarrer une temporisation après avoir commandé le module (43) de commande d'équilibrage pour arrêter l'apprentissage des paramètres d'équilibrage de liaison, et pour commander le module (43) de commande d'équilibrage de façon à démarrer l'apprentissage des paramètres d'équilibrage de liaison en réponse au fait qu'une valeur de temporisation atteigne une première durée prédéfinie ;
**caractérisé en ce que** le module (42) de commande de protection comprend un module (421) de verrouillage d'état et un module (422) de commande de temporisation, dans lequel :
le module (421) de verrouillage d'état possède une entrée connectée à une sortie du module (41) de détection de stabilité de signal, une sortie connectée à une extrémité de commande de réinitialisation du module (43) de commande d'équilibrage et une extrémité de commande de réinitialisation du module (422) de commande de temporisation respectivement, et une extrémité de commande de réinitialisation connectée à une sortie du module (422) de commande de temporisation ;
le module (41) de détection de stabilité de signal est configuré pour envoyer un premier signal de commande représentant un signal instable au module (421) de verrouillage d'état en réponse à la détection du signal série instable ;
le module (421) de verrouillage d'état est configuré pour envoyer un premier signal de commande de réinitialisation au module (422) de commande de temporisation pour déclencher le module (422) de commande de temporisation pour démarrer la temporisation après avoir reçu le premier signal de commande, effectuer une commande de réinitialisation sur le module (43) de commande d'équilibrage avant de recevoir un deuxième signal de commande de réinitialisation provenant du module (422) de commande de temporisation, et terminer la commande de réinitialisation sur le module (43) de commande d'équilibrage en réponse à la réception du deuxième signal de commande de réinitialisation ;
le module (422) de commande de temporisation est configuré pour démarrer une temporisation actuelle et désactiver une fonction de réinitialisation du module (422) de commande de temporisation en fonction du premier signal de commande de réinitialisation, et envoyer un deuxième signal de commande de réinitialisation au module (421) de verrouillage d'état en réponse au fait que la valeur de temporisation atteigne la première durée prédéfinie t1 ; et
le module (43) de commande d'équilibrage, dans un état de réinitialisation, arrête l'apprentissage des paramètres d'équilibrage de liaison.

2. Le circuit de commande d'apprentissage de paramètres d'équilibrage de liaison selon la revendication 1, dans lequel le module (421) de verrouillage d'état comprend un verrou de premier étage (4211) et un verrou de deuxième étage (4212), dans lequel :
le verrou de premier étage (4211) possède une entrée connectée à une sortie du module (41) de détection de stabilité de signal, une sortie connectée à une entrée du verrou de deuxième étage (4212) et l'extrémité de commande de réinitialisation du module (422) de commande de temporisation respectivement ; le verrou de deuxième étage (4212) a une sortie connectée à l'extrémité de commande de réinitialisation du module (43) de commande d'équilibrage ; le module (422) de commande de temporisation comprend une première sortie et une deuxième sortie respectivement connectées à une extrémité de commande de réinitialisation du verrou de premier étage (4211) et à une extrémité de commande de réinitialisation du verrou de deuxième étage (4212) ;
le verrou de premier étage (4211) est configuré pour envoyer un premier signal de commande de réinitialisation au module (422) de commande de temporisation pour déclencher le module (422) de commande de temporisation pour démarrer la temporisation après avoir reçu le premier signal de commande, continuer à envoyer le premier signal de commande au verrou de deuxième étage (4212) avant de recevoir un deuxième signal de commande de réinitialisation en provenance du module (422) de commande de temporisation, et arrêter d'envoyer le premier signal de commande au verrou de deuxième étage (4212) en réponse au fait que le deuxième signal de commande de réinitialisation soit reçu ;
le verrou de deuxième étage (4212) est configuré pour effectuer une commande de réinitialisation sur le module (43) de commande d'équilibrage après avoir reçu le premier signal de commande et avant de recevoir le deuxième signal de commande de réinitialisation provenant du module (422) de commande de temporisation, et terminer la commande de réinitialisation sur le module (43) de commande d'équilibrage en réponse au fait que le deuxième signal de commande de réinitialisation soit reçu ; et
le module (422) de commande de temporisation est configuré pour, après avoir démarré une temporisation actuelle selon le premier signal de commande de réinitialisation, envoyer un deuxième signal de commande de réinitialisation au verrou de premier étage (4211) en réponse au fait que la valeur de temporisation atteigne un première sous-durée t11 prédéfinie et envoyer un deuxième signal de commande de réinitialisation au verrou de deuxième étage (4212) en réponse au fait que la valeur de temporisation atteigne une somme de la première sous-durée prédéfinie t 11 et d'une deuxième sous-durée prédéfinie t12, avec t1 = t11+ t12.

3. Le circuit de commande d'apprentissage de paramètres d'équilibrage de liaison selon la revendication 2, dans lequel le module (422) de commande de temporisation est en outre configuré pour activer la fonction de réinitialisation du module (422) de commande de temporisation en réponse au fait que la valeur de temporisation atteigne une troisième sous-durée prédéfinie t13 après l'envoi du deuxième signal de commande de réinitialisation au verrou de premier étage (4211), et effectuer un nouveau cycle de temporisation en réponse à la réception du premier signal de commande de réinitialisation avant que la valeur de temporisation n'atteigne le ; et
la troisième sous-durée prédéfinie 113 est supérieure ou égale à la t11, et inférieure à la t1.

4. Le circuit de commande d'apprentissage de paramètres d'équilibrage de liaison selon la revendication 1, dans lequel le circuit comprend au moins deux voies du module (41) de détection de stabilité de signal et du module (421) de verrouillage d'état, chaque voie comprenant un module (421) de verrouillage d'état et un module (41) de détection de stabilité de signal correspondant à une liaison série à grande vitesse ;
le circuit de commande d'apprentissage de paramètres d'équilibrage de liaison comprend en outre un circuit de commande de grille OU ayant une pluralité d'entrées et une sortie, les sorties des modules (421) de verrouillage d'état qui correspondent aux liaisons série à grande vitesse respectives étant connectées aux entrées du circuit de commande de grille OU respectivement, la sortie du circuit de commande de grille OU est connectée à l'extrémité de commande de réinitialisation du module (422) de commande de temporisation, et le circuit de commande de grille OU comporte en outre une extrémité de commande de réinitialisation connectée à une sortie de début de temporisation du module (422) de commande de temporisation ; et
le module (421) de verrouillage d'état de l'une des liaisons série à grande vitesse est configuré pour envoyer un premier signal de commande de réinitialisation au module (422) de commande de temporisation via le circuit de commande de grille OU afin de déclencher le module (422) de commande de temporisation pour qu'il démarre la temporisation, après avoir reçu le premier signal de commande ; et le module (422) de commande de temporisation est configuré pour envoyer un signal de commande de réinitialisation au circuit de commande de grille OU via la sortie de démarrage de temporisation pour effectuer une commande de réinitialisation sur le circuit de commande de grille OU, après le démarrage de la temporisation et avant la fin de la temporisation actuelle, et envoyer un troisième signal de commande de réinitialisation au circuit de commande de grille OU pour terminer la commande de réinitialisation sur le circuit de commande de grille OU après la fin de la temporisation actuelle.

5. Le circuit de commande d'apprentissage de paramètres d'équilibrage de liaison selon la revendication 1, dans lequel le module (41) de détection de stabilité de signal est en outre configuré pour envoyer un deuxième signal de commande représentant un signal stable au module (42) de commande de protection en réponse au fait de détecter des données série stables ; et
le module (42) de commande de protection est configuré pour commander le module (43) de commande d'équilibrage de la liaison série à grande vitesse afin de démarrer l'apprentissage des paramètres d'équilibrage de liaison en réponse au fait que le module (43) de commande d'équilibrage soit dans un état d'arrêt de l'apprentissage de paramètres d'équilibrage de liaison et en réponse au fait que le deuxième signal de commande soit reçu.

6. Le circuit de commande d'apprentissage de paramètres d'équilibrage de liaison selon la revendication 5, dans lequel commander, par le module (42) de commande de protection, le module (43) de commande d'équilibrage de la liaison série à grande vitesse pour démarrer l'apprentissage des paramètres d'équilibrage de liaison selon le deuxième signal de commande comprend les étapes suivantes : détecter si le premier signal de commande est reçu pendant une deuxième durée prédéfinie t2 après que le deuxième signal de commande soit reçu ; et si le premier signal de commande n'est pas reçu, commander le module (43) de commande d'équilibrage de la liaison série à grande vitesse de façon qu'il démarre l'apprentissage des paramètres d'équilibrage de liaison.

7. Le circuit de commande d'apprentissage des paramètres d'équilibrage de liaison selon l'une des revendications 1 à 6, dans lequel le module (41) de détection de stabilité de signal est un module de récupération de données d'horloge ; et
le module de récupération de données d'horloge est configuré pour récupérer un signal d'horloge à partir des données série et envoyer un premier signal de commande représentant le fait qu'un signal est instable en réponse à la détection d'un signal instable.

8. Une puce de liaison série à grande vitesse, **caractérisée par le fait qu'**elle comprend le circuit de commande d'apprentissage des paramètres d'équilibrage de liaison selon l'une des revendications 1 à 7.

9. Un dispositif électronique, **caractérisé en ce qu'**il comprend la puce de liaison série à haute vitesse selon la revendication 8.
